# EUROPEAN PATENT SPECIFICATION

(11) **EP 4 080 239 B1**
(45) Date of publication and mention of the grant of the patent: **10.06.2026**
(21) Application number: 21169324.7
(22) Date of filing: 20.04.2021
(51) Int. Cl.: G01S 7/41, G01S 7/539, G01S 13/931, G01S 15/931

(54) **MEASURING THE PERFORMANCE OF RADAR, ULTRASOUND OR AUDIO CLASSIFIERS**
MESSUNG DER LEISTUNG VON RADAR-, ULTRASCHALL- ODER AUDIOKLASSIFIKATOREN
MESURE DES PERFORMANCES DES CLASSIFICATEURS RADAR, À ULTRASONS OU AUDIO

(43) Date of publication of application: 26.10.2022
(73) Proprietor: Robert Bosch GmbH, 70442 Stuttgart (DE)
(72) Inventor: Patel, Kanil, 70435 Stuttgart (DE)

(56) References cited:
- KR-A- 20200 132 727
- US-A1- 2018 053 070
- US-A1- 2018 373 963

## Description

The present invention relates to the evaluation of radar, ultrasound or audio classifiers that are used to interpret radar, ultrasound or audio spectra, e.g., for the purpose of automatically steering a vehicle through road traffic.

### Background

Automatic steering of a vehicle through road traffic requires capturing the environment of the vehicle and taking action in case a collision with an object in the environment of the vehicle is imminent. Safe automated driving also requires obtaining a representation of the environment of the vehicle and localizing objects.

Capturing objects by means of radar is independent from the lighting conditions in the traffic scene. For example, even at night, objects may be detected at a large distance without blinding oncoming traffic with high-beam illumination. Also, radar measurements immediately yield the distance to an object and the speed of that object. This information is important for determining whether a collision with an object is possible. However, the radar data does not allow a direct determination of the type of an object.

DE 10 2018 222 672 A1 discloses a method for determining the spatial orientation of an object based on a measurement signal that comprises the response of the object to electromagnetic interrogation radiation. In particular, this response may comprise a reflection of the interrogation radiation. A classifier, and/or a regressor, is used to determine the sought spatial orientation.

### Disclosure of the invention

The invention provides a method for measuring the performance of a classifier for radar, ultrasound or audio spectra. Such a spectrum comprises the dependence of at least one measurement quantity that has been derived from a radar, ultrasound or audio signal on spatial coordinates. For example, reflected radar or ultrasound radiation may give rise to a radar or ultrasound signal. For example, spatial coordinates may comprise a range and one or more angles. The classifier is configured to map a radar, ultrasound or audio spectrum to a set of classification scores with respect to classes of a given classification. For example, such classification scores may represent confidences with which the classifier attributes the spectrum to the respective classes. The classes may, for example, represent types of objects, such as other traffic participants or obstacles, or overall assessments of situations, such as a risk level.

The method uses a given set of test radar, ultrasound or audio spectra. These spectra form part of, and/or define, a common distribution or manifold. Basically, this distribution or manifold may be understood to define what the test radar, ultrasound or audio spectra have in common. For example, spectra that have been acquired on a lot of different cars form part of a manifold that generically comprises spectra that have been acquired on cars. A spectrum that has been acquired on another car is likely to form part of this same manifold. But a spectrum that has been acquired on a house is not likely to form part of this manifold.

For example, the test spectra may belong to the same distribution or manifold as training spectra that were used to train the given classifier. For training and subsequent testing of a classifier, it is a frequent practice to partition one large set of spectra that belong to a common distribution or manifold into training data for training the classifier, test data for testing the performance of the classifier, and optionally also validation data.

At least one evaluation spectrum is obtained. This evaluation spectrum may be a modification of at least one test spectrum with substantially the same semantic content as this at least one test spectrum. In particular, a modification may be chosen such that, compared with the original test spectrum, the evaluation spectrum is moved towards a spectrum that is no longer part of the common distribution or manifold. Figuratively speaking, the evaluation spectrum is then moved from within the common distribution or manifold towards a "boundary" of this common distribution or manifold. This "boundary" is not to be confused with a decision boundary between classes. That is, if the evaluation spectrum is becoming more and more out-of-distribution, this does not yet make it similar to another class. Rather, the evaluation spectrum is moving away from all data of all classes.

But the evaluation spectrum may also be chosen from the start to be a spectrum that does not form part of the common distribution or manifold. For example, the spectrum may comprise only noise, or it may represent a situation that is different from all situations represented by the test spectra in some aspect. For example, a spectrum that represents a house is not part of a common distribution or manifold of spectra that represent cars.

The at least one evaluation spectrum is mapped to a set of evaluation classification scores by the given classifier. Based on these evaluation classification scores, and/or on a further outcome produced by the given classifier during the processing of the evaluation spectrum, the sought performance is determined. The further outcome may, for example, be a latent representation that is created in the classifier by a stack of convolutional layers and is to be processed into the set of evaluation classification scores by a classification layer, such as a fully connected layer.

The advantage of measuring the performance of the given classifier in this manner is that the development process of the classifier is facilitated. Usually, a trained classifier is tested in a lot of real situations and has to pass a certain list of tests before it is deemed to be safe for use, e.g., in an at least partially automated vehicle in road traffic. This may involve acquiring a lot of radar, ultrasound or audio spectra on test drives, feeding all these spectra into the classifier under test, and then rating whether an action that the vehicle would perform based on the results obtained from the classifier would be appropriate in the traffic situation at hand. If the classifier fails this test, it is sent back for further development. This process is very time-consuming and expensive. In particular, obtaining spectra may also involve obtaining labels. It may be hard to evaluate measured data without having any labels.

The present method does not need any more labels than are already available in the original training or test dataset. The evaluation spectrum provides its own "ground truth" for rating the outcome of the classifier. Therefore, the present method is usable as a "pre-test" for a classifier that may be performed on a computer before said testing under real conditions. If a given classifier fails this "pre-test", it is highly improbable that it will pass the test under real conditions, so it may be sent back for further development right away. The situation is in some way analogous to university studies: Students are given high workloads in difficult subjects already in the first semesters as a "pre-test" whether they will be able to successfully complete the course of studies. If a student is flunked out in the first semester already for want of performance in the "pre-test" subjects, this is less expensive for all involved than giving him a failing grade at the end of ten or more semesters.

One unwanted behavior of classifiers that may be detected in this manner is over-confidence. In many applications, there is a desire that the classifier outputs a "one-hot" classification vector that has a nonzero component for only one class. The downside of this is that, even when a perturbation starts to move the spectrum away from the common distribution or manifold, the confidence outputted by the classifier remains on a high plateau. The confidence suddenly drops when the class boundary is crossed. For example, this unwanted behavior of classifiers may be induced by training the classifier according to a cross-entropy loss in combination with hard ground truth labels (i.e., one-hot maximum confidence 1 for exactly one class).

The present method specifically measures a capability that is very important for the use of machine-learning classifiers in automated driving systems, namely the power to generalize. As every human driver knows from his or her own experience with driving classes, this power is indispensable. A human driver typically spends only on the order of some tens of hours behind the wheel and covers less than 1000 km before being licensed. After being licensed, the driver is expected to handle every situation at least well enough that no harm to others is caused, even if the situation is totally unseen and has not been part of the training. For example, if the training has been done during spring and summer, the freshly licensed driver will have zero experience with conditions in autumn and winter, but will nonetheless be expected to drive safely under these conditions.

For the monitoring of a vehicle environment based on radar, ultrasound and/or audio measurements, the power to generalize is even more important. In particular, it is inherent to such measurements that even slight changes in the view point and/or perspective may drastically change the spectrum, so that even two spectra acquired in immediate succession may differ. Therefore, even when the traffic situation itself remains more or less constant, a wide variety of different spectra may occur. Also, radar, ultrasound or audio spectra are hard to interpret for humans, so it is advantageous to have a quantitative and objective measure for the performance of the classifier.

Detecting modifications of test spectra as spectra that basically have the same semantic content is one side of the generalization medal. The other side is how the classifier handles spectra that are clearly out of the common distribution or manifold of the test spectra. In this case, the spectrum does not really fit into any one of the available classes. For example, if the classifier is trained to classify vehicles into passenger cars, trucks, buses, cycles and motorcycles, none of these classes really match a spectrum that represents a house. Yet, it is a frequent occurrence that a classifier just chooses any one of the available classes and assigns a high score to this class, as if the classifier had landed on a Web form that allows only choosing exactly one class and also grays out the "Proceed" button until this one choice has been made. The desired behavior for a clearly out-of-distribution spectrum is that such a spectrum is assigned uniformly low scores with respect to all available classes.

Modifications of test spectra may be used to assess how robust a decision of the classifier is against such modifications. Ideally, if the classifier has learned to assess the pure semantic content of the spectrum, the classification scores should not change if the inputted spectrum is modified in a way that does not change the semantic content. Therefore, in a particularly advantageous embodiment, the determining is based at least in part on a comparison between an outcome of the classifier for the evaluation spectrum and an outcome that the classifier has outputted or should output for
- a test spectrum from which the evaluation spectrum has been derived, and/or
- at least one other test spectrum from the given set of test spectra.

In particular, the outcome that is used for the comparison may comprise:
- at least one classification score and/or confidence, and/or;
- a rating of at least one classification score by a loss function; and/or
- a classification accuracy; and/or
- an expected calibration error, which is a weighted average over differences between confidence and accuracy.

In a particularly advantageous embodiment, the obtaining of the at least one evaluation spectrum may comprise:
- applying at least one perturbation to at least one test spectrum, thereby generating a perturbed spectrum; and
- determining the evaluation spectrum from the at least one perturbed spectrum.

That is, an evaluation spectrum is not limited to being created from one single test spectrum only. Rather, several test spectra may serve as building materials for creating one evaluation spectrum.

In particular, the perturbation may specifically be chosen to be a perturbation that is likely to occur during the acquisition of a radar, ultrasound or audio signal with at least one sensor, and/or during the signal processing that derives the at least one measurement quantity from said signal. If the outcome of the classifier does not change too much in response to these perturbations being applied, it is very probable that these perturbations will also not impair the operation of the classifier too much when it is tested under real conditions.

Examples for such perturbations include:
- multiplying the test spectrum with a scalar constant, which corresponds to an amplification or a damping in the signal processing path;
- multiplying values in the test spectrum with noise samples drawn from a random distribution, which corresponds to bad weather or other conditions that cause fluctuations in the signal strength;
- shifting the test spectrum with respect to at least one spatial coordinate, which corresponds to a misalignment of the sensor setup;
- downsampling of the test spectrum and then scaling it back to its original size, which corresponds to the failure of an antenna in an antenna array;
- cutting out a portion of the test spectrum and then scaling this portion to the original size of the test spectrum, which corresponds to a change in the magnification; and
- smoothing the test spectrum, which corresponds to a finite bandwidth of the signal processing.

In particular, the sought performance may be determined as a function of a strength of the applied perturbation. This results in a more objective rating of the resiliency against such perturbations. It is to be expected that there is some quantitative limit to the resiliency against most, if not all, disturbances.

As discussed before, a classifier that has been trained to recognize the semantic content of spectra is expected not to change its outcome too much in response to realistic perturbations that basically leave the semantic content intact. Therefore, advantageously, the smaller a difference determined during said comparison with outcomes for test spectra is, the better the sought performance is determined to be.

As discussed before, it is also important that out-of-distribution spectra are recognized as such, rather than being classified into one of the in-distribution classes with high confidence. Therefore, in a further advantageous embodiment, the sought performance is determined based at least in part on a distinguishing performance of the classifier in distinguishing between spectra that do not form part of the common distribution or manifold and spectra that form part of the common distribution or manifold.

Such distinguishing performance may, for example, be measured using an integral of a receiver operating characteristic curve, and/or using a mean-maximal confidence. The latter is optimized when the classifier assigns low confidences to unknown out-of-distribution data.

In a further advantageous embodiment, the sought performance may be determined based at least in part on the uniformity of the evaluation classification scores outputted by the classifier for an evaluation spectrum that does not form part of the common distribution or manifold. As discussed before, if the classifier does not really know what to do with an out-of-distribution spectrum, it should not assign this spectrum to one particular class with a high confidence because no class really fits and there is no reason why it should be assigned to said one class and not another.

When designing a classifier, some design choices regarding the architecture, such as sizes, numbers or types of layers, may be expressed as hyperparameters. Also, further hyperparameters may affect the behavior of the training. Examples of these hyperparameters comprise a learning rate and a relative weighting of different terms that together make up an objective function (loss function). The method for measuring the performance of the classifier described above may advantageously be used for automatically optimizing these hyperparameters. The invention therefore also provides a method for training a classifier for radar, ultrasound or audio spectra.

This method starts with setting at least one hyperparameter that affects the architecture of the classifier, and/or the behavior of the training of this classifier. Training spectra are provided, and at least some of these training spectra are labelled with ground truth classification scores. The classifier is trained in an at least partially supervised manner with the objective that, when given the labelled training spectra, it maps them to the ground truth classification scores.

After the classifier has been trained, its performance is measured with the method described before. At least one hyperparameter is optimized with the objective that, when the classifier is trained and its performance is measured again, this performance is likely to improve. In this manner, the further degree of freedom in the hyperparameter is exploited to improve the final performance of the classifier further.

The invention also provides a further method that covers the complete sequence of actions up to and including the actuation of a vehicle.

This method starts with providing a classifier for radar, ultrasound or audio spectra. This classifier is trained with the method described above.

Using at least one radar, ultrasound or audio sensor carried by a vehicle, at least one radar, ultrasound or audio spectrum is acquired. Using the trained classifier, the at least one radar, ultrasound or audio spectrum is mapped to classification scores. Based at least in part on these classification scores, an actuation signal is determined. The vehicle is then actuated with this actuation signal.

In this manner, when a traffic situation is sensed by the sensor, the probability is increased that the action caused by the actuating of the vehicle is appropriate in this traffic situation because the classifier sufficiently generalizes from its training to this particular traffic situation.

The methods described above may be wholly or partially computer-implemented, and thus embodied in software. The invention therefore also relates to a computer program, comprising machine-readable instructions that, when executed by one or more computers, cause the one or more computers to perform a method described above. In this respect, control units for vehicles and other embedded systems that may run executable program code are to be understood to be computers as well. A non-transitory storage medium, and/or a download product, may comprise the computer program. A download product is an electronic product that may be sold online and transferred over a network for immediate fulfilment. One or more computers may be equipped with said computer program, and/or with said non-transitory storage medium and/or download product.

In the following, the invention and its preferred embodiments are illustrated using Figures without any intention to limit the scope of the invention.

The Figures show:
Figure 1 Exemplary embodiment of the method 100 for measuring the performance 6 of a classifier 1;
Figure 2 Exemplary embodiment of the method 200 for training the classifier 1;
Figure 3 Exemplary embodiment of the method 300 with the complete sequence of actions up to and including the actuating of a vehicle 50.

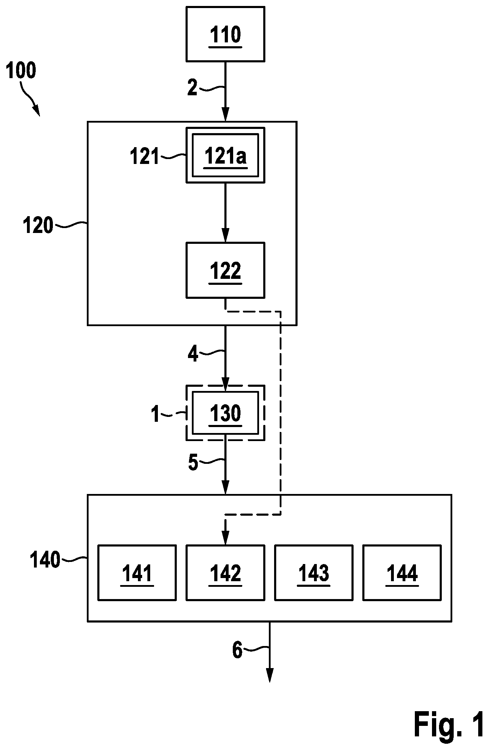

Figure 1 is a schematic flow chart of an exemplary embodiment of the method 100 for measuring the performance 6 of the classifier 1.

In step 100, a set of test radar, ultrasound or audio spectra 2 is provided.

In step 120, at least one evaluation spectrum 4 is obtained. This evaluation spectrum 4 is a modification of at least one test spectrum 2 with substantially the same semantic content as this at least one test spectrum 2, and/or it does not form part of the common distribution or manifold.

In particular, according to block 121, the obtaining 120 of the evaluation spectrum 4 may comprise applying at least one perturbation to at least one test spectrum. This produces a perturbed spectrum. From this at least one perturbed spectrum, the evaluation spectrum 4 may then be determined according to block 122.

According to block 121a, the perturbation may be specifically chosen to be a perturbation that is likely to occur during the acquisition of a radar, ultrasound or audio signal with at least one sensor 10, and/or during the signal processing that derives the at least one measurement quantity of the radar, ultrasound or audio spectrum from said signal.

In step 130, the given classifier 1 maps the at least one evaluation spectrum 4 to a set of evaluation classification scores 5.

In step 140, the sought performance 6 is determined based on the set of evaluation classification scores (5), and/or on a further outcome produced by the given classifier 1 during the processing of the evaluation spectrum 4.

In particular, according to block 141, this determining 140 may be based at least in part on a comparison between an outcome of the classifier 1 for the evaluation spectrum 4 and an outcome that the classifier 1 has outputted or should output for
- a test spectrum 2 from which the evaluation spectrum 4 has been derived, and/or
- at least one other test spectrum 2 from the given set of test spectra.

One example of an outcome that the classifier 1 "should output" for a test spectrum 2 is a ground truth label associated with this test spectrum 2.

According to block 142, the sought performance 6 may be determined as a function of a strength of an applied perturbation.

According to block 143, the sought performance 6 may be determined based at least in part on a distinguishing performance of the classifier 1 in distinguishing between spectra that do not form part of the common distribution or manifold and spectra that form part of the common distribution or manifold.

According to block 144, the sought performance 6 may be determined based at least in part on the uniformity of the evaluation classification scores 5 outputted by the classifier 1 for an evaluation spectrum 4 that does not form part of the common distribution or manifold.

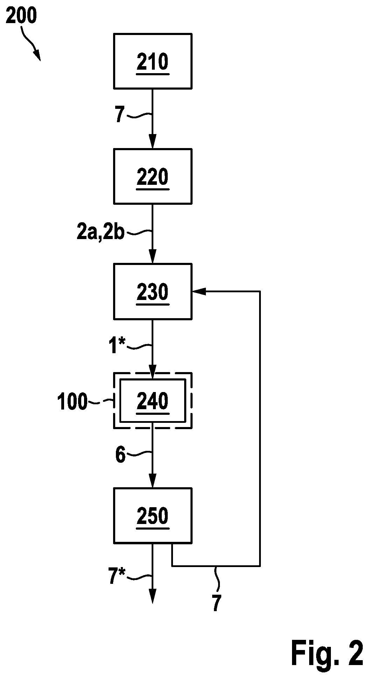

Figure 2 is a schematic flow chart of an embodiment of the method 200 for training a classifier 1 for radar, ultrasound or audio spectra.

In step 210, at least one hyperparameter 7 is set. This hyperparameter 7 affects the architecture of the classifier 1, and/or the behavior of the training of this classifier 1.

In step 220, training spectra 2a that are labelled with ground truth classification scores 2b are provided.

In step 230, the classifier 1 is trained with the objective that, when given the training spectra 2a, it maps them to the ground truth classification scores 2b. The trained classifier is labelled with the reference sign 1*.

In step 240, the performance 6 of the trained classifier 1* is measured with the method 100 described above.

In step 250, the at least one hyperparameter 7 is optimized with the objective that, when the classifier 1 is trained in step 230 and its performance 6 is measured in step 240 again, this performance 6 is likely to improve. This optimization may be terminated according to any suitable termination criterion. The finally obtained optimized value of the hyperparameter 7 is labelled with the reference sign 7*.

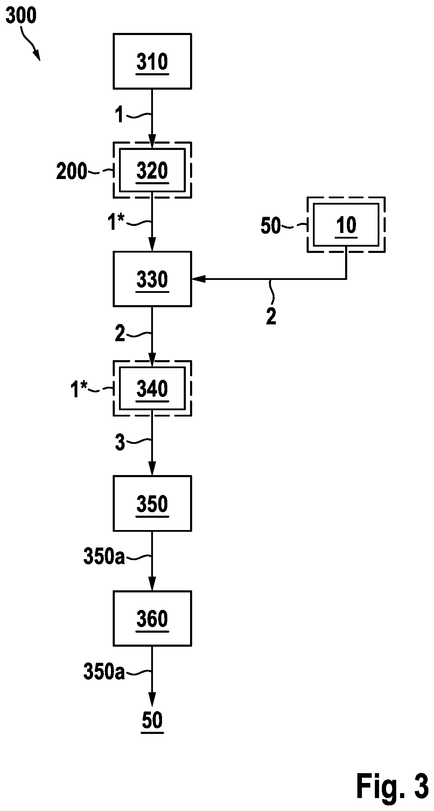

Figure 3 is a schematic flow chart of an embodiment of the method 300 with the complete sequence of actions.

In step 310, a classifier 1 for radar, ultrasound or audio spectra 2 is provided.

In step 320, the classifier 1 is trained with the method 200 described above.

In step 330, at least one radar, ultrasound or audio spectrum 2 is acquired using at least one radar, ultrasound or audio sensor 10 that is carried by a vehicle 50.

In step 340, the at least one radar, ultrasound or audio spectrum 2 is mapped to classification scores 3 using the trained classifier 1*.

In step 350, based at least in part on the classification scores 3, an actuation signal 350a is determined.

In step 360, the vehicle 50 is actuated with the actuation signal 350a.

## Claims

1. A method (100) for measuring the performance (6) of a classifier (1) for radar, ultrasound or audio spectra (2), wherein the spectrum (2) comprises the dependence of at least one measurement quantity that has been derived from a radar, ultrasound or audio signal on spatial coordinates, and the classifier (1) is configured to map a radar, ultrasound or audio spectrum (2) to a set of classification scores (3) with respect to classes of a given classification, the method (100) comprising the steps of:
• providing (110) a set of test radar, ultrasound or audio spectra (2) that form part of, and/or define, a common distribution or manifold;
• obtaining (120) at least one evaluation spectrum (4) that
∘ is a modification of at least one test spectrum (2) with substantially the same semantic content as this at least one test spectrum (2), and/or
∘ does not form part of the common distribution or manifold;
• mapping (130), by means of the given classifier (1), the at least one evaluation spectrum (4) to the set of classification scores (5); **characterised in that** the method further comprises
• determining (140) a sought performance (6) based on the set of classification scores (5), and/or on a further outcome produced by the given classifier (1) during the processing of the evaluation spectrum (4),
wherein the determining (140) is based at least in part on a comparison (141) between an outcome of the classifier (1) for the evaluation spectrum (4) and an outcome that the classifier (1) has outputted or should output for
• a test spectrum (2) from which the evaluation spectrum (4) has been derived, and/or
• at least one other test spectrum (2) from the given set of test spectra.

2. The method (100) of claim 1, wherein the outcome that is used for the comparison (141) comprises:
• at least one classification score and/or confidence, and/or;
• a rating of at least one classification score by a loss function; and/or
• a classification accuracy; and/or
• an expected calibration error.

3. The method (100) of any one of claims 1 to 2, wherein the obtaining (120) of the at least one evaluation spectrum (4) comprises:
• applying (121) at least one perturbation to at least one test spectrum (2), thereby generating a perturbed spectrum; and
• determining (122) the evaluation spectrum (4) from the at least one perturbed spectrum.

4. The method (100) of claim 3, further comprising: specifically choosing (121a) a perturbation that is likely to occur during the acquisition of a radar, ultrasound or audio signal with at least one sensor (10), and/or during the signal processing that derives the at least one measurement quantity from said signal.

5. The method (100) of any one of claims 3 to 4, wherein the at least one perturbation comprises:
• multiplying the test spectrum (2) with a scalar constant; and/or
• multiplying values in the test spectrum (2) with noise samples drawn from a random distribution; and/or
• shifting the test spectrum (2) with respect to at least one spatial coordinate; and/or
• downsampling the test spectrum (2) and then scaling it back to its original size; and/or
• cutting out a portion of the test spectrum (2) and then scaling this portion to the original size of the test spectrum (2); and/or
• smoothing the test spectrum (2).

6. The method (100) of any one of claims 3 to 5, wherein the sought performance (6) is determined (142) as a function of a strength of the applied perturbation.

7. The method (100) of any one of claims 1 to 6, wherein, the smaller a difference determined during the comparison (141) is, the better the sought performance (6) is determined to be.

8. The method (100) of any one of claims 1 to 7, wherein the sought performance (6) is determined (143) based at least in part on a distinguishing performance of the classifier (1) in distinguishing between spectra that do not form part of the common distribution or manifold and spectra that form part of the common distribution or manifold.

9. The method (100) of any one of claims 1 to 8, wherein the sought performance (6) is determined (144) based at least in part on the uniformity of the evaluation classification scores (5) outputted by the classifier (1) for an evaluation spectrum (4) that does not form part of the common distribution or manifold.

10. A method (200) for training a classifier (1) for radar, ultrasound or audio spectra, comprising the steps of:
• setting (210) at least one hyperparameter (7) that affects the architecture of the classifier (1), and/or the behavior of the training of this classifier (1);
• providing (220) training spectra (2a) that are labelled with ground truth classification scores (2b);
• training (230) the classifier (1) with the objective that, when given the training spectra (2a), it maps them to the ground truth classification scores (2b);
• measuring (240) the performance (6) of the trained classifier (1*) with the method (100) of any one of claims 1 to 10; and
• optimizing (250) the at least one hyperparameter (7) with the objective that, when the classifier (1) is trained (230) and its performance (6) is measured (240) again, this performance (6) is likely to improve.

11. A method (300), comprising the steps of:
• providing (310) a classifier (1) for radar, ultrasound or audio spectra (2);
• training (320) the classifier (1) with the method (200) according to claim 11;
• acquiring (330), using at least one radar, ultrasound or audio sensor (10) carried by a vehicle (50), at least one radar, ultrasound or audio spectrum (2);
• mapping (340), using the trained classifier (1*), the at least one radar, ultrasound or audio spectrum (2) to classification scores (3);
• determining (350) an actuation signal (350a) based at least in part on the classification scores (3); and
• actuating (360) the vehicle (50) with the actuation signal (350a).

12. A computer program, comprising machine-readable instructions that, when executed by one or more computers, cause the one or more computers to perform a method (100, 200, 300) of any one of claims 1 to 11.

13. A non-transitory machine-readable storage medium, and/or a download product, with the computer program of claim 12.

14. One or more computers with the computer program of claim 12, and/or with the non-transitory machine-readable storage medium and/or download product of claim 13.

## Patentansprüche

1. Verfahren (100) zur Messung der Leistung (6) eines Klassifikators (1) für Radar-, Ultraschall- oder Audiospektren (2), wobei das Spektrum (2) die Abhängigkeit mindestens einer Messgröße, die von einem Radar-, Ultraschall- oder Audiosignal abgeleitet wurde, von räumlichen Koordinaten umfasst, und der Klassifikator (1) dazu ausgelegt ist, ein Radar-, Ultraschall- oder Audiospektrum (2) einem Satz von Klassifizierungsscores (3) in Bezug auf Klassen einer gegebenen Klassifizierung zuzuordnen, wobei das Verfahren (100) die folgenden Schritte umfasst:
• Bereitstellen (110) eines Satzes von Test-Radar-, -Ultraschall- oder - Audiospektren (2), die Teil einer gemeinsamen Verteilung oder Mannigfaltigkeit sind und/oder diese definieren;
• Erhalten (120) mindestens eines Evaluationsspektrums (4), das
o eine Modifikation mindestens eines Testspektrums (2) mit dem im Wesentlichen gleichen semantischen Inhalt wie dieses mindestens eine Testspektrum (2) ist, und/oder
o nicht Teil der gemeinsamen Verteilung oder Mannigfaltigkeit ist;
• Zuordnen (130) des mindestens einen Evaluationsspektrums (4) mittels des gegebenen Klassifikators (1) zu dem Satz von Klassifizierungsscores (5); **dadurch gekennzeichnet, dass** das Verfahren ferner Folgendes umfasst:
• Bestimmen (140) einer gesuchten Leistung (6) basierend auf dem Satz von Klassifizierungsscores (5) und/oder auf einem weiteren Ergebnis, das von dem gegebenen Klassifikator (1) während der Verarbeitung des Evaluationsspektrums (4) erzeugt wird,
wobei das Bestimmen (140) zumindest teilweise auf einem Vergleich (141) zwischen einem Ergebnis des Klassifikators (1) für das Evaluationsspektrum (4) und einem Ergebnis basiert, das der Klassifikator (1) ausgegeben hat oder ausgegeben sollte für
• ein Testspektrum (2), von dem das Evaluationsspektrum (4) abgeleitet wurde, und/oder
• mindestens ein anderes Testspektrum (2) aus dem gegebenen Satz von Testspektren.

2. Verfahren (100) nach Anspruch 1, wobei das Ergebnis, das für den Vergleich (141) verwendet wird, Folgendes umfasst:
• mindestens einen Klassifizierungsscore und/oder eine Konfidenz, und/oder
• eine Bewertung mindestens eines Klassifizierungsscores durch eine Verlustfunktion; und/oder
• eine Klassifizierungsgenauigkeit; und/oder
• einen erwarteten Kalibrierungsfehler.

3. Verfahren (100) nach einem der Ansprüche 1 bis 2, wobei das Erhalten (120) des mindestens einen Evaluationsspektrums (4) Folgendes umfasst:
• Anwenden (121) mindestens einer Störung auf mindestens ein Testspektrum (2), um dadurch ein gestörtes Spektrum zu erzeugen; und
• Bestimmen (122) des Evaluationsspektrums (4) aus dem mindestens einen gestörten Spektrum.

4. Verfahren (100) nach Anspruch 3, ferner umfassend: spezifisches Auswählen (121a) einer Störung, die wahrscheinlich während der Erfassung eines Radar-, Ultraschall- oder Audiosignals mit mindestens einem Sensor (10) und/oder während der Signalverarbeitung auftritt, die die mindestens eine Messgröße aus dem Signal ableitet.

5. Verfahren (100) nach einem der Ansprüche 3 bis 4, wobei die mindestens eine Störung Folgendes umfasst:
• Multiplizieren des Testspektrums (2) mit einer skalaren Konstanten; und/oder
• Multiplizieren von Werten im Testspektrum (2) mit Rauschproben, die einer Zufallsverteilung entnommen wurden; und/oder
• Verschieben des Testspektrums (2) in Bezug auf mindestens eine räumliche Koordinate; und/oder
• Herunterskalieren des Testspektrums (2) und anschließendes Zurückskalieren auf seine ursprüngliche Größe; und/oder
• Ausschneiden eines Teils des Testspektrums (2) und anschließendes Skalieren dieses Teils auf die ursprüngliche Größe des Testspektrums (2); und/oder
• Glätten des Testspektrums (2).

6. Verfahren (100) nach einem der Ansprüche 3 bis 5, wobei die gesuchte Leistung (6) als eine Funktion einer Stärke der angewandten Störung bestimmt wird (142).

7. Verfahren (100) nach einem der Ansprüche 1 bis 6, wobei die gesuchte Leistung (6) als umso besser bestimmt wird, je kleiner eine während des Vergleichs (141) bestimmte Differenz ist.

8. Verfahren (100) nach einem der Ansprüche 1 bis 7, wobei die gesuchte Leistung (6) zumindest teilweise basierend auf einer Unterscheidungsleistung des Klassifikators (1) beim Unterscheiden zwischen Spektren, die nicht Teil der gemeinsamen Verteilung oder Mannigfaltigkeit sind, und Spektren, die Teil der gemeinsamen Verteilung oder Mannigfaltigkeit sind, bestimmt wird (143).

9. Verfahren (100) nach einem der Ansprüche 1 bis 8, wobei die gesuchte Leistung (6) zumindest teilweise basierend auf der Einheitlichkeit der Evaluationsklassifizierungsscores (5) bestimmt wird (144), die von dem Klassifikator (1) für ein Evaluationsspektrum (4) ausgegeben werden, das nicht Teil der gemeinsamen Verteilung oder Mannigfaltigkeit ist.

10. Verfahren (200) zum Trainieren eines Klassifikators (1) für Radar-, Ultraschall- oder Audiospektren, umfassend die folgenden Schritte:
• Einstellen (210) mindestens eines Hyperparameters (7), der die Architektur des Klassifikators (1) und/oder das Verhalten des Trainings dieses Klassifikators (1) beeinflusst;
• Bereitstellen (220) von Trainingsspektren (2a), die mit Ground-Truth-Klassifizierungsscores (2b) gekennzeichnet sind;
• Trainieren (230) des Klassifikators (1) mit dem Ziel, dass er, wenn ihm Trainingsspektren (2a) eingegeben werden, diese den Ground-Truth-Klassifizierungsscores (2b) zuordnet;
• Messen (240) der Leistung (6) des trainierten Klassifikators (1*) mit dem Verfahren (100) nach einem der Ansprüche 1 bis 10; und
• Optimieren (250) des mindestens einen Hyperparameters (7) mit dem Ziel, dass sich, wenn der Klassifikator (1) trainiert wird (230) und seine Leistung (6) erneut gemessen wird (240), diese Leistung (6) wahrscheinlich verbessert.

11. Verfahren (300), umfassend die folgenden Schritte:
• Bereitstellen (310) eines Klassifikators (1) für Radar-, Ultraschall- oder Audiospektren (2);
• Trainieren (320) des Klassifikators (1) mit dem Verfahren (200) nach Anspruch 11;
• Erfassen (330) mindestens eines Radar-, Ultraschall- oder Audiospektrums (2) unter Verwendung mindestens eines Radar-, Ultraschall- oder Audiosensors (10), der von einem Fahrzeug (50) mitgeführt wird;
• Zuordnen (340) des mindestens einen Radar-, Ultraschall- oder Audiospektrums (2) unter Verwendung des trainierten Klassifikators (1*) zu Klassifizierungsscores (3);
• Bestimmen (350) eines Betätigungssignals (350a) zumindest teilweise basierend auf den Klassifizierungsscores (3); und
• Betätigen (360) des Fahrzeugs (50) mit dem Betätigungssignal (350a).

12. Computerprogramm, umfassend maschinenlesbare Anweisungen, die bei Ausführung durch einen oder mehrere Computer den einen oder die mehreren Computer zum Durchführen eines Verfahren (100, 200, 300) nach einem der Ansprüche 1 bis 11 veranlassen.

13. Nichtflüchtiges maschinenlesbares Speichermedium und/oder Downloadprodukt mit dem Computerprogramm nach Anspruch 12.

14. Ein oder mehrere Computer mit dem Computerprogramm nach Anspruch 12 und/oder mit dem nichtflüchtigen maschinenlesbaren Speichermedium nach Anspruch 13.

## Revendications

1. Procédé (100) de mesure de la performance (6) d'un classificateur (1) pour spectres radar, ultrasonore ou audio (2), le spectre (2) comprenant la dépendance d'au moins une grandeur de mesure qui a été tirée d'un signal radar, ultrasonore ou audio vis-à-vis de coordonnées spatiales, et le classificateur (1) étant configuré pour associer un spectre radar, ultrasonore ou audio (2) à un ensemble de scores (3) de classification par rapport à des classes d'une classification donnée, le procédé (100) comprenant les étapes consistant à :
• fournir (110) un ensemble de spectres radar, ultrasonores ou audio (2) de test qui font partie et/ou définissent une distribution ou une variété commune ;
• obtenir (120) au moins un spectre (4) d'évaluation qui
o est une modification d'au moins un spectre (2) de test présentant sensiblement le même contenu sémantique que ce ou ces spectres (2) de test, et/ou
o ne fait pas partie de la distribution ou de la variété commune ;
• associer (130), au moyen du classificateur (1) donné, du au moins un spectre (4) d'évaluation à l'ensemble de scores (5) de classification ; **caractérisé en ce que** le procédé comprend en outre
• déterminer (140) une performance recherchée (6) sur la base de l'ensemble des notes (5) de classification, et/ou d'un résultat supplémentaire produit par le classificateur (1) donné au cours du traitement du spectre (4) d'évaluation, la détermination (140) étant basée au moins en partie sur une comparaison (141) entre un résultat du classificateur (1) pour le spectre (4) d'évaluation et un résultat que le classificateur (1) a délivré ou devrait délivrer
• un spectre (2) de test duquel le spectre (4) d'évaluation a été tiré, et/ou
• au moins un autre spectre (2) de test de l'ensemble donné de spectres de test.

2. Procédé (100) selon la revendication 1, le résultat qui est utilisé pour la comparaison (141) comprenant :
• au moins un score de classification et/ou de confiance, et/ou ;
• une note d'au moins un score de classification par une fonction de perte ; et/ou
• une précision de classification ; et/ou
• une erreur d'étalonnage attendue.

3. Procédé (100) selon l'une quelconque des revendications 1 à 2, l'obtention (120) du ou des spectres (4) d'évaluation comprenant :
• l'application (121) d'au moins une perturbation à au moins un spectre (2) de test, générant ainsi un spectre perturbé ; et
• la détermination (122) du spectre (4) d'évaluation à partir du ou des spectres perturbés.

4. Procédé (100) selon la revendication 3, comprenant en outre : le choix spécifique (121a) d'une perturbation qui est susceptible de se produire pendant l'acquisition d'un signal radar, ultrasonore ou audio avec au moins un capteur (10), et/ou pendant le traitement du signal qui tire la ou les grandeurs de mesure dudit signal.

5. Procédé (100) selon l'une quelconque des revendications 3 à 4, la ou les perturbations comprenant :
• la multiplication du spectre (2) de test par une constante scalaire ; et/ou
• la multiplication de valeurs dans le spectre (2) de test par des échantillons de bruit tirés d'une distribution aléatoire ; et/ou
• le décalage du spectre (2) de test par rapport à au moins une coordonnée spatiale ; et/ou
• le fait de sous-échantillonner le spectre (2) de test, puis de le ramener à sa taille d'origine ; et/ou
• la découpe d'une partie du spectre (2) de test, puis la mise à l'échelle de cette partie à la taille d'origine du spectre (2) de test ; et/ou
• le lissage du spectre (2) de test.

6. Procédé (100) selon l'une quelconque des revendications 3 à 5, la performance recherchée (6) étant déterminée (142) en fonction d'une intensité de la perturbation appliquée.

7. Procédé (100) selon l'une quelconque des revendications 1 à 6, la performance recherchée (6) étant déterminée comme étant d'autant meilleure qu'une différence déterminée lors de la comparaison (141) est plus petite.

8. Procédé (100) selon l'une quelconque des revendications 1 à 7, la performance recherchée (6) étant déterminée (143) sur la base au moins en partie d'une performance de distinction du classificateur (1) dans la distinction entre des spectres qui ne font pas partie de la distribution ou de la variété commune et des spectres qui font partie de la distribution ou de la variété commune.

9. Procédé (100) selon l'une quelconque des revendications 1 à 8, la performance recherchée (6) étant déterminée (144) en se basant au moins en partie sur l'uniformité des scores (5) de classification d'évaluation délivrés par le classificateur (1) pour un spectre (4) d'évaluation qui ne fait pas partie de la distribution ou de la variété commune.

10. Procédé (200) d'entraînement d'un classificateur (1) pour spectres radar, ultrasonore ou audio, comprenant les étapes de :
• réglage (210) d'au moins un hyperparamètre (7) qui affecte l'architecture du classificateur (1), et/ou le comportement de l'apprentissage de ce classificateur (1) ;
• la fourniture (220) de spectres (2a) d'apprentissage qui sont étiquetés avec des scores (2b) de classification de vérité de terrain ;
• entraînement (230) du classificateur (1) avec pour objectif que, lorsqu'il reçoit les spectres (2a) d'apprentissage, il les associe aux scores (2b) de classification de vérité de terrain ;
• la mesure (240) de la performance (6) du classificateur entraîné (1*) avec le procédé (100) selon l'une quelconque des revendications 1 à 10 ; et
• l'optimisation (250) de l'hyperparamètre ou des hyperparamètres (7) avec pour objectif que, lorsque le classificateur (1) est entrainé (230) et que sa performance (6) est mesurée à nouveau (240), cette performance (6) soit susceptible de s'améliorer.

11. Procédé (300), comprenant les étapes de :
• mise en place (310) d'un classificateur (1) pour spectres radar, ultrasonique ou audio (2) ;
• entraînement (320) du classificateur (1) avec le procédé (200) selon la revendication 11 ;
• acquisition (330), par au moins un capteur radar, ultrasonique ou audio (10) porté par un véhicule (50), d'au moins un spectre radar, ultrasonique ou audio (2) ;
• association (340), par le classificateur entraîné (1*), du ou des spectres radar, ultrasonores ou audio (2) à des scores (3) de classification ;
• détermination (350) d'un signal (350a) d'actionnement sur la base, au moins en partie, des scores (3) de classification ; et
• actionnement (360) du véhicule (50) avec le signal (350a) d'actionnement.

12. Programme informatique, comprenant des instructions lisibles par machine qui, lorsqu'elles sont exécutées par un ou plusieurs ordinateurs, amènent l'ordinateur ou les ordinateurs à réaliser un procédé (100, 200, 300) selon l'une quelconque des revendications 1 à 11.

13. Support de stockage non transitoire lisible par machine et/ou produit en téléchargement, doté du programme informatique selon la revendication 12.

14. Un ou plusieurs ordinateurs dotés du programme informatique selon la revendication 12, et/ou du support de stockage non transitoire lisible par machine et/ou du produit en téléchargement selon la revendication 13.
